# EUROPÄISCHE PATENTANMELDUNG

(11) **EP 4 230 557 A1**
(43) Veröffentlichungstag der Anmeldung: **23.08.2023**
(21) Anmeldenummer: 23167497.9
(22) Anmeldetag: 11.04.2019
(51) Int. Cl.: B65G 54/02, B65G 47/84, B65G 47/71

(54) **VORRICHTUNG UND VERFAHREN ZUM PUFFERN VON STÜCKGÜTERN**

(30) Priorität: 17.07.2018 DE 102018211859
(62) Teilanmeldung aus: 19168676.5
(71) Anmelder: KRONES Aktiengesellschaft, 93073 Neutraubling (DE)
(72) Erfinder: SEGER, Martin, Neutraubling (DE); WAHL, Matthias, Neutraubling (DE); JOGSCH, Michael, Neutraubling (DE)
(74) Vertreter: Grünecker Patent- und Rechtsanwälte PartG mbB

(57) **Zusammenfassung**

Die Erfindung betrifft eine Puffervorrichtung und ein Verfahren zum Puffern von Stückgütern, beispielsweise Behälter, Flaschen oder Gebinde, mit einer Pufferfläche (3), einer Zufördereinrichtung (4) zum Zufördern von Stückgüter zu der Pufferfläche (3) und einer Abfördereinrichtung (5) zum Abfördern von Stückgütern von der Pufferfläche (3). Die Zufördereinrichtung (4) erstreckt sich bis in einen Einlaufbereich (11), der an das hintere Ende der Pufferfläche (3) angrenzt. Am gegenüberliegenden Ende der Pufferfläche (3) ist die Abfördereinrichtung (5) angeordnet. Mehrere umlaufende, unabhängig voneinander antreibbare Reihenschieber (7) sind vorgesehen, die die Stückgüter (2) in Transportrichtung (T) durch die Pufferfläche (3) transportieren können. Die Umlaufbahn der Reihenschieber ist oberhalb der Pufferfläche (3) angeordnet. Sowohl die Zufördereinrichtung (4) als auch die Abfördereinrichtung (5) erstrecken sich in einer Richtung senkrecht zur Transportrichtung (T), in der die Stückgüter durch die Pufferfläche (3) bewegt werden.

## Beschreibung

Die Erfindung betrifft eine Puffervorrichtung und ein Verfahren zum Puffern von Stückgütern, insbesondere Behälter, Flaschen oder Gebinde gemäß dem Oberbegriff der Ansprüche 1 und 11.

Im Bereich der Getränketechnologie, insbesondere im Bereich Block- und Transporttechnik, sind bereits Puffer bekannt, die eine Anzahl von Stückgütern, die einer nachfolgenden Maschine erst später zugeleitet werden sollen, aufhält und abpuffert.

Aus der WO 2016/200748 A1 ist bereits eine entsprechende Puffervorrichtung gemäß den Oberbegriffen der Ansprüche 1 und 11 bekannt.

Bei der bekannten Puffervorrichtung werden die Artikel über Robotermanipulatoren auf die Pufferfläche gebracht.

Die Verwendung von Robotermanipulatoren ist kostspielig, außerdem bringt das bekannte System Nachteile beim Austakten einer bestimmten Anzahl von Reihen bzw. Zeilen mit sich, die auf die Gassenzahl eines nachfolgenden Packers abgestimmt werden muss. So kann ein Wechseln bzw. Ausbauen von Leitblechen notwendig werden.

Hiervon ausgehend liegt der vorliegenden Erfindung die Aufgabe zugrunde, eine Puffervorrichtung sowie ein entsprechendes Verfahren bereitzustellen, die ermöglichen, dass mit bedarfsorientierter Anzahl von Pufferreihen bzw. -zeilen aus der Pufferfläche gefahren werden kann, wobei die Vorrichtung gleichzeitig einfach und kostengünstig realisiert werden kann.

Erfindungsgemäß wird diese Aufgabe durch die Merkmale 1 und 11 gelöst.

Die erfindungsgemäße Puffervorrichtung für Stückgüter, beispielsweise Behälter, Flaschen oder Gebinde, umfasst eine Pufferfläche, eine Zufördereinrichtung zum Zufördern von Stückgüter zu der Pufferfläche und eine Abfördereinrichtung zum Abfördern von Stückgütern von der Pufferfläche. Die Zufördereinrichtung erstreckt sich bis in einen Einlaufbereich, der an das hintere Ende der Pufferfläche angrenzt. Am gegenüberliegenden Ende der Pufferfläche ist die Abfördereinrichtung angeordnet. Die Puffervorrichtung umfasst zudem mehrere umlaufende, unabhängig voneinander antreibbare Reihenschieber, die die Stückgüter in Transportrichtung durch die Pufferfläche transportieren können. Die Umlaufbahn der Reihenschieber ist oberhalb der Pufferfläche angeordnet. Sowohl die Zufördereinrichtung als auch die Abfördereinrichtung erstrecken sich in einer Richtung senkrecht zur Transportrichtung, in der die Stückgüter durch die Pufferfläche bewegt werden. Durch die jeweils unabhängig voneinander antreibbaren Reihenschieber können die Stückgüter der Pufferfläche zeilenweise zugeführt werden und es kann mit einer bedarfsorientierten Anzahl von Pufferzeilen aus der Pufferfläche gefahren werden. Das heißt, dass beispielsweise ein Artikelstrang zu der Pufferfläche transportiert werden kann, jedoch z. B. hinter der Pufferfläche zwei Stränge abgeführt werden können, um die Stückgüter zwei Maschinen zuzuführen wobei z.B. zwei Zeilen an Stückgütern durch jeweilige Reihenschieber auf die Abfördereinrichtung geschoben werden können derart, dass sie parallel zueinander auf der Abfördereinrichtung liegen. Anschließend können die Zeilen dann wieder getrennt werden und in zwei Produktsträngen jeweiligen Maschinen zugeführt werden.

Dadurch, dass die Reihenschieber unabhängig voneinander antreibbar sind, können beispielsweise Freiräume auf der Pufferfläche einfach überfahren werden. Wenn der Freiraum komplett überfahren wurde, kann beispielsweise dann die Bewegung des jeweiligen Reihenschiebers wieder verlangsamt werden und schließlich an die Auslaufsituation angepasst werden. Durch die unabhängig voneinander antreibbaren und frei programmierbaren Antriebe der Reihenschieber, sind sämtliche Abstände zwischen den Reihenschiebern softwaretechnisch einstellbar, sodass beispielsweise bei einem Sortenwechsel kein Umbauen nötig ist. Darüber hinaus kann auf aktuelle Zustände reagiert werden und eine bedarfsorientierte Anzahl aus der Pufferfläche ausgeschoben werden. Wenn zwischen jeder Zeile an Stückgütern bzw. Stückgüterpulk ein Reihenschieber angeordnet ist, kann die Menge an von der Pufferfläche ausgeschobenen Stückgütern besonders gut und einfach gesteuert werden. Zusätzlich sind die Abstände der Reihen zueinander einstellbar was eine platzoptimierte Ansteuerung möglich macht.

Es ist besonders vorteilhaft, wenn die Reihenschieber von mehreren unabhängigen Antrieben antreibbar sind, sodass die Geschwindigkeit der Reihenschieber individuell angepasst werden kann. Dazu kann beispielsweise ein Längsstatorantrieb vorgesehen sein, oder aber die Reihenschieber können über kuppelbare Transportketten angetrieben werden. Es ist auch möglich, dass jeder Reihenschieber einen gesonderten elektrischen Antriebsmotor aufweist.

Die Pufferfläche kann als statischer Puffertisch oder aber als sich in Transportrichtung bewegendes Förderband ausgebildet sein.

Gemäß der vorliegenden Erfindung ist es vorteilhafterweise möglich, dass in einer Transportrichtung von dem der Zufördereinrichtung zugewandten Ende der Pufferfläche zu einem der Abfördereinrichtung zugewandten Ende der Pufferfläche mehrere Reihenschieber hintereinander die Stückgüter schieben, insbesondere weist die Puffervorrichtung mehr als 10, vorteilhaft mehr als 15 und besonders vorteilhaft mehr als 30 umlaufende Reihenschieber auf.

Die Umlaufbahn der Schieber ist oberhalb der Pufferfläche angeordnet. So kann sich der entsprechende Reihenschieber in Transportrichtung quer zur Zufördereinrichtung über die Pufferfläche bewegen und sich dann am Ende der Pufferfläche sowie Abfördereinrichtung wieder zu einem Einlaufbereich zurückbewegen.

Gemäß einem bevorzugten Ausführungsbeispiel weist ein Reihenschieber eine Breite b auf, die im Wesentlichen der Breite der Pufferfläche entspricht, wobei hier im Wesentlichen die gleiche Breite bedeutet, dass die Breite des Reihenschiebers höchstens um 1 bis 5 % der Breite der Pufferfläche oder 2 mal der halbe Artikeldurchmesser abweicht - d.h. kleiner ist. Somit kann sichergestellt werden, dass alle Stückgüter sicher vom Schieber erfasst werden, und gegebenenfalls noch von einer Seitenführung an der Pufferfläche geführt werden.

Gemäß einem bevorzugten Ausführungsbeispiel umfasst ein Reihenschieber mehrere in einer Richtung quer zur Transportrichtung angeordnete Schiebermodule, die also dann nur eine Breite aufweisen, die einer Teilbreite der Breite der Pufferfläche entspricht. Vorzugsweise sind auch diese Schiebermodule unabhängig voneinander antreibbar, was eine noch größere Variationsmöglichkeit beim Ausschieben mit sich bringt und ein noch gezielteres Abführen der Stückgüter von der Pufferfläche ermöglicht, da nicht stets eine ganze Zeile ausgeschoben werden muss, sondern gezielt nur eine bestimmte Anzahl an Stückgütern abgeführt werden kann.

Gemäß einer bevorzugten Ausführungsform umfasst die Puffervorrichtung vor dem Einlaufbereich auf die Pufferfläche (wobei der Einlaufbereich der Zufördereinrichtung an das Ende der Pufferfläche angrenzt) eine Ablenkeinrichtung wie Bsp. eine Weiche, wobei auch andere Ablenkeinrichtungen denkbar sind, die den von der Zufördereinrichtung zugeführten Stückgüterstrang derart ablenkt, dass eine bestimmte Anzahl aufeinanderfolgender Stückgüter eine Sägezahnform aufweist. Dabei kann der zugeführte Artikelstrang aus einer Artikelreihe gebildet sein oder aber aus mehreren parallelen Reihen. Wird auf die Spitze des einlaufenden sägezahnförmigen Pulks dann ein synchronisierter Reihenschieber gesteuert, welcher dem Sägezahn dann weiterfolgt in Richtung Pufferfläche, wird erreicht, dass der Reihenschieber ohne den Stückgüterstrom unterbrechen zu müssen, der aus der Weiche kommt, zwischen die einzelnen sägezahnförmigen Zeilen bzw. Pulks eingefahren werden kann.

Gemäß einer bevorzugten Ausführungsform umfasst die Abfördereinrichtung mindestens zwei Abförderbänder wobei mindestens eine Zeile an Stückgüter von der Pufferfläche auf ein erstes Abförderband geschoben werden kann und bei mehreren auf dem ersten Abförderband nebeneinanderliegenden Zeilen der Artikelstrom über eine Verteileinrichtung auf die mindestens zwei Abförderbänder in zwei Stränge aufgeteilt werden kann, oder
die Abfördereinrichtung zwei nebeneinanderliegende Abförderbänder umfasst und die Zeile an Stückgütern auf das eine oder andere Abförderband von dem Reihenschieber oder einem Reihenschiebermodul geschoben werden kann.

Es ist auch möglich, dass die Artikelströme nach der Pufferfläche weiter in Transportrichtung T gefördert werden und vorzugsweise dabei insbesondere geführt um 90° gedreht werden.

Bei dem erfindungsgemäßen Verfahren zum Puffern von Stückgütern, insbesondere Behältern, Flaschen oder Gebinde, werden die Stückgüter über eine Zufördereinrichtung zu einer Pufferfläche gefördert, und von unabhängig voneinander antreibbaren Reihenschiebern in Transportrichtung durch die Pufferfläche und zu einer Abfördereinrichtung geschoben.

Somit können die Stückgüter durch die Reihenschieber auf die Pufferfläche geschoben werden und auch von der Pufferfläche auf die Abfördereinrichtung geschoben werden. Wenn sich die Pufferfläche selbst nicht bewegt, können die Reihenschieber die Stückgüter auf der Pufferfläche in Richtung Abfördereinrichtung schieben. Ist die Pufferfläche als in Transportrichtung bewegliches Förderband ausgebildet, kann sich der Reihenschieber mit gleicher Geschwindigkeit bewegen, und somit die Stückgüter abstützen. Bewegt sich der Reihenschieber schneller als das Förderband, so kann der Reihenschieber die Stückgüter aufgrund der Relativgeschwindigkeit auf der Pufferfläche in Transportrichtung verschieben.

Vorteilhafterweise kann der Reihenschieber eine bestimmte Anzahl an Stückgütern zeilenweise auf die Pufferfläche einschieben.

Vorteilhafterweise können die Reihenschieber zumindest zeitweise mit unterschiedlichen Geschwindigkeiten angetrieben werden, sodass sich auch der Abstand zwischen zwei aufeinanderfolgenden Reihenschiebern ändert. Somit können die Stückgüter gezielt gepuffert und bedarfsgerecht ausgeschoben werden. Somit können auch auf einfache Art und Weise Freiräume in der Mitte der Pufferfläche überfahren werden. Vorzugsweise variiert die Geschwindigkeit eines Reihenschiebers bei Umlauf um eine Umlaufbahn, so dass die Geschwindigkeit an unterschiedliche Bedingungen beim Einlaufen, Transport über die Pufferfläche, Ausschieben sowie schnellem Rückweg in die Ausgangsposition gezielt angepasst werden kann ohne dabei jedoch die anderen Reihenschieber zu beeinflussen.

Vorteilhafterweise ist vor dem Einlauf auf die Pufferfläche vorgesehen, eine bestimmte Anzahl an Artikeln in eine Sägezahnform zu bringen, wobei die Sägezahnform eine Spitze und zwei unter flachem Winkel α zulaufende Abschnitte aufweisen. Der Winkel α liegt dabei beispielsweise in einem Bereich von 1,5° bis 10°. Beim Einlaufen der Stückgüter in den Einlaufbereich, d. h., einem Bereich der Fördereinrichtung vor der Pufferfläche, bewegt sich ein in Transportrichtung einlaufender Reihenschieber und greift zunächst an dem vorauseilenden Abschnitt der sägezahnförmigen Artikel an, der im Wesentlichen parallel zur Vorderfläche des Reihenschiebers verläuft. Der Reihenschieber führt diesen Abschnitt in Transportrichtung mit, während die Stückgüter des nacheilenden Abschnitts, der sich unter einem spitzen Winkel zur Vorderfläche des Reihenschiebers erstreckt, sich nach und nach vor den Reihenschieber bewegen, bis die Artikel einer Zeile vor dem Reihenschieber liegen, und der Reihenschieber den Abschnitt auf die Pufferfläche schiebt.

Somit können die Stückgüter und die Reihenschieber einlaufen, ohne dass ein Reihenschieber oder die Zulaufeinrichtung gestoppt werden müssen. Dies ermöglicht eine kontinuierliche Betriebsweise.

Vorteilhafterweise laufen die Reihenschieber auf einer Umlaufbahn oberhalb der Pufferfläche um und werden vorzugsweise beidseitig, d. h. links und rechts von der Pufferfläche geführt.

Es ist möglich, dass die Stückgüter in einem Stückgüterstrang zugeleitet werden, der ein oder mehrreihig sein kann und nach dem Puffertisch eine Verteilereinrichtung vorgesehen ist, die die Stückgüter in zwei oder mehr Strängen zum Abfördern zu zwei oder mehr Maschinen teilt.

Es ist möglich, dass in Transportrichtung mehrere, vorzugsweise zwei parallel angeordnete Zeilen von mehreren Reihenschiebern, vorzugsweise zwei, auf die Abfördereinrichtung geschoben werden und anschließend über eine Verteilereinrichtung in mehrere, vorzugsweise zwei Stückgüterstränge geteilt werden oder
nur eine Zeile von einem Reihenschieber auf die Abfördereinrichtung geschoben wird und ein Stückgüterstrang abgeleitet wird.

Das Verfahren kann somit gezielt an bestimmte Anforderungen angepasst werden.

Die vorliegende Erfindung wird nachfolgend unter Bezugnahme der folgenden Figuren näher erläutert.
- Fig. 1: zeigt grobschematisch eine Draufsicht auf ein Ausführungsbeispiel einer Puffervorrichtung gemäß der vorliegenden Erfindung.
- Fig. 2: zeigt grobschematisch eine Seitenansicht einer Puffervorrichtung gemäß einem Ausführungsbeispiel der vorliegenden Erfindung.
- Fig. 3: zeigt schematisch eine Aufsicht auf die Zuführeinrichtung mit einer vorgeschalteten Weiche sowie die Auslenkung der Stückgüter durch die Weiche in Abhängigkeit der Zeit.
- Fig. 4: zeigt grob schematisch ein Weg-Zeit-Diagramm, das die Bewegung des Behälterstroms und des Reihenschiebers zu verschiedenen Zeitpunkten zeigt.
- Fig. 5: zeigt grob schematisch ein bevorzugtes Ausführungsbeispiel der Puffervorrichtung mit Verteileinrichtung.
- Fig. 6: zeigt grob schematisch eine Aufsicht auf ein weiteres Ausführungsbeispiel.
- Fig. 7: zeigt eine bevorzugte Ausführungsform eines Reihenschiebers mit mehreren Modulen.
- Fig. 8a,8b: zeigen einen eireihigen und mehrreihigen Stückgutstrang.

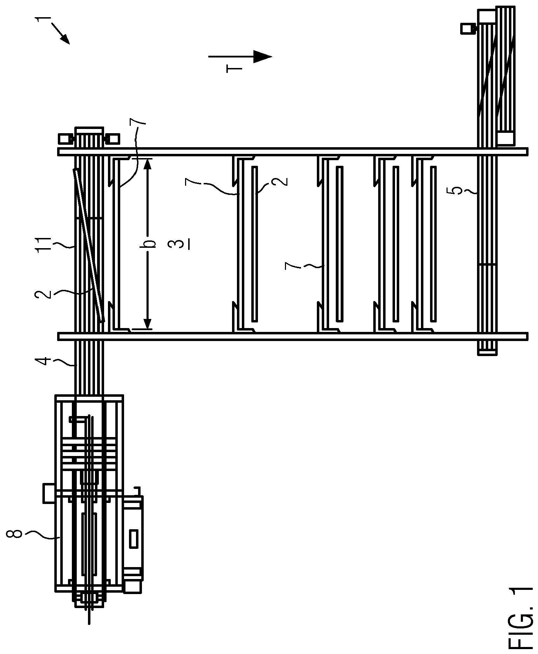

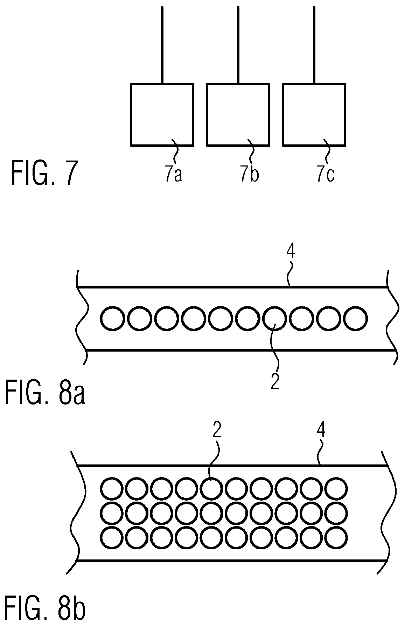

Fig. 1 zeigt eine Aufsicht auf ein Ausführungsbeispiel einer Puffervorrichtung gemäß der vorliegenden Erfindung. Die Vorrichtung umfasst eine Zufördereinrichtung 4 zum Zufördern von Stückgütern, wie beispielsweise Behälter, Flaschen oder Gebinde. Die Zufördereinrichtung ist vorzugsweise als umlaufendes Förderband ausgebildet. Die Zufördereinrichtung 4 erstreckt sich dabei bis in einen Einlaufbereich 11, der an das hintere Ende einer Pufferfläche 3 angrenzt. Am gegenüberliegenden Ende der Pufferfläche 3 ist die Abfördereinrichtung 5 angeordnet, die insbesondere auch als umlaufendes Förderband ausgebildet ist. Bei diesem Ausführungsbeispiel erstrecken sich sowohl die Zufördereinrichtung 4 als auch die Abfördereinrichtung 5 in einer Richtung senkrecht zur Transportrichtung T in der die Stückgüter durch die Pufferfläche 3 bewegt werden. Die Stückgüter werden auf der Zufördereinrichtung 4 in einem Stückgüterstrang antransportiert, der einreihig ausgebildet sein kann, wobei jedoch auch mehrere Stückgüter nebeneinander in einem Strang transportiert werden können, wie beispielsweise aus Fig. 8A und 8B hervorgeht.

Eine bestimmte Anzahl an Stückgütern im Einlaufbereich 11 kann von einem Reihenschieber 7 erfasst und als Zeile auf die Pufferfläche 3 geschoben werden.

Dazu weist die Puffervorrichtung 1 mehrere umlaufende, unabhängig voneinander antreibbare Reihenschieber 7 auf. Die Reihenschieber 7 weisen eine Breite b auf, die im Wesentlichen der Breite der Pufferfläche 3 entspricht, oder aber nur geringfügig, 1 % bis 5 % kleiner ist, um die Stückgüter zeilenweise vom Einlaufbereich 11 und über die Pufferfläche 3 zu schieben.

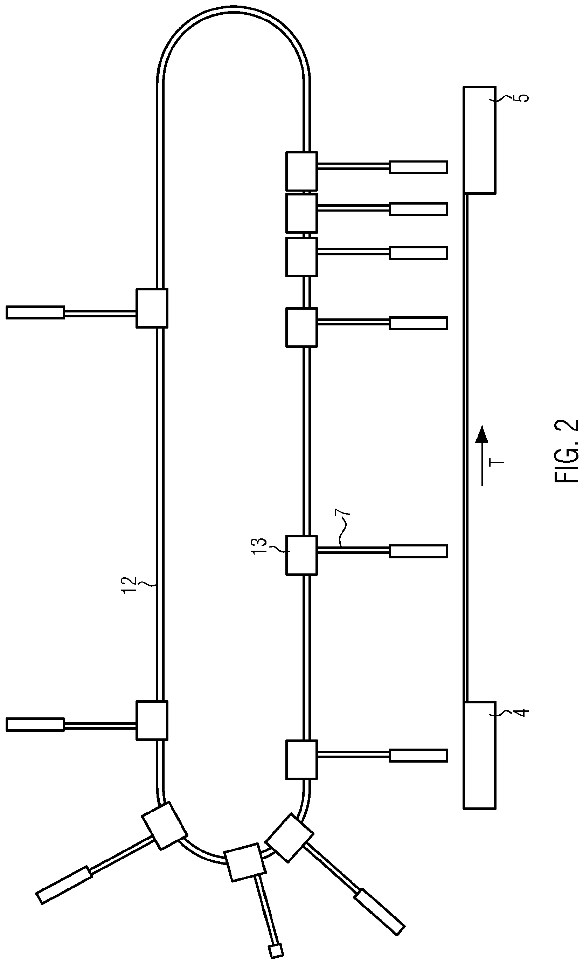

Vorteilhafterweise werden die Reihenschieber 7 von jeweiligen unabhängigen Antrieben 13 angetrieben, wie aus Fig. 2 hervorgeht.

Die Reihenschieber 7 können beispielsweise über einen sogenannten Längsstatorantrieb 13 oder kuppelbare Transportketten angetrieben werden, sodass verschiedene Reihenschieber 7 mit unterschiedlichen Geschwindigkeiten angetrieben werden können, derart, dass auch der Abstand benachbarter Reihenschieber variiert werden und die Geschwindigkeit individuell angepasst werden kann. Die Reihenschieber sind z.B. als Läufer von Linearmotoren, die auf der Umlaufbahn 12 angeordnet sind, ausgebildet und dazu in ihrem oberen Bereich mit Permanentmagneten versehen. Die Permanentmagneten und ein entsprechender Linearmotor stellen dann zusammen einen jeweiligen Antrieb für einen Reihenschieber dar.

Nicht nur die Verwendung eines Längsstatormotors bzw. auskuppelbare Ketten ist möglich, um die Reihenschieber 7 unabhängig voneinander anzutreiben. Es kann auch für jeden Reihenschieber 7 ein eigener Motor vorgesehen sein, der die Schieber 7 beispielsweise über ein Zahnrad und eine Zahnstange auf der geschlossenen Umlaufbahn 12 bewegt. Die Energieversorgung der Motoren kann dann über einen nicht extra dargestellten Schleifkontakt oder sogar induktiv erfolgen. Die Ansteuerung der Motoren erfolgt ebenfalls über Schleifkontakt oder über Funksignale etc.

Zusätzlich kann auch eine nicht dargestellte Einrichtung zur Positionserkennung (z.B. optisch) der Reihenschieber 7 vorgesehen sein, um die Bewegung der Reihenschieber (Geschwindigkeit und/oder Bewegungslänge) in Abhängigkeit Ihrer Position zu steuern und beispielsweise auch an die Bewegung der Zu- und Abfördereinrichtung 4, 5 und/oder Pufferbelegung anzupassen.

Dadurch, dass die Reihenschieber unabhängig voneinander antreibbar sind, können beispielsweise Freiräume auf der Pufferfläche einfach überfahren werden. Wenn der Freiraum beispielsweise komplett überfahren wurde, kann dann die Bewegung des jeweiligen Reihenschiebers wieder verlangsamt werden und schließlich an die Auslaufsituation angepasst werden.

Durch die unabhängig voneinander antreibbaren Reihenschieber und frei programmierbaren Antrieben der Reihenschieber 7 sind sämtliche Abstände zwischen den Reihenschiebern softwaretechnisch einstellbar, sodass beispielsweise bei einem Sortenwechsel kein Umbau nötig ist. Darüber hinaus kann auf aktuelle Zustände reagiert werden und eine bedarfsorientiere Anzahl an Stückgütern aus der Pufferfläche 3 ausgeschoben werden. Da zwischen jeder Zeile an Stückgütern bzw. Stückgüterpulk ein Reihenschieber 7 angeordnet ist, kann die Menge an ausgeschobenen Stückgütern besonders gut gesteuert werden und nach Bedarf angepasst werden. Vorzugsweise umfasst die Vorrichtung mehr als 15 besonders mehr als 30 Reihenschieber.

Wie aus Fig. 1 und 2 hervorgeht, befindet sich die Umlaufbahn 12 der Reihenschieber oberhalb der Pufferfläche 3, wobei die Reihenschieber beidseitig oberhalb der Pufferfläche 3 geführt werden, um für ausreichende Stabilität zu sorgen. Die Reihenschieber sind frei beweglich an der umlaufenden Führung der Umlaufbahn 12 angeordnet und können sich so entlang in Transportrichtung T über die Pufferfläche 3 bewegen, wie aus Fig. 2 hervorgeht. Am Ende der Pufferfläche 3 bewegen sich die Reihenschieber 7 dann nach oben weg und kehren zum Einlaufbereich 11 der Zufuhreinrichtung 4 zurück, um hier die Stückgüter wiederum zeilenweise zu übernehmen und auf die Pufferfläche und über die Pufferfläche 3 zu schieben.

Bei dieser Ausführungsform kann die Pufferfläche 3 als statische Pufferfläche ausgebildet sein. Grundsätzlich ist es aber auch möglich, dass die Pufferfläche 3 selbst ebenfalls als Förderband, das sich in Transportrichtung T bewegt und umlaufend angetrieben wird, ausgebildet ist. Wenn die Pufferfläche 3 als bewegliches Förderband ausgebildet ist, kann sich der Reihenschieber 7 mit gleicher Geschwindigkeit bewegen und somit die Stückgüter abstützen. Bewegt sich der Reihenschieber schneller als die Pufferfläche, so kann der Reihenschieber 7 die Stückgüter aufgrund der Relativgeschwindigkeit auf der Pufferfläche in Transportrichtung verschieben.

Gemäß einer bevorzugten Ausführungsform befindet sich vor dem Einlaufbereich 11 eine Weiche 8, die derart ausgebildet ist, dass der von der Zufördereinrichtung 4 zugeführte Stückgüterstrang derart abgelenkt wird, dass eine bestimmte Anzahl aufeinanderfolgender Stückgüter, die dann eine Zeile bilden, die überführt werden soll, in eine Sägezahnform gebracht werden können.

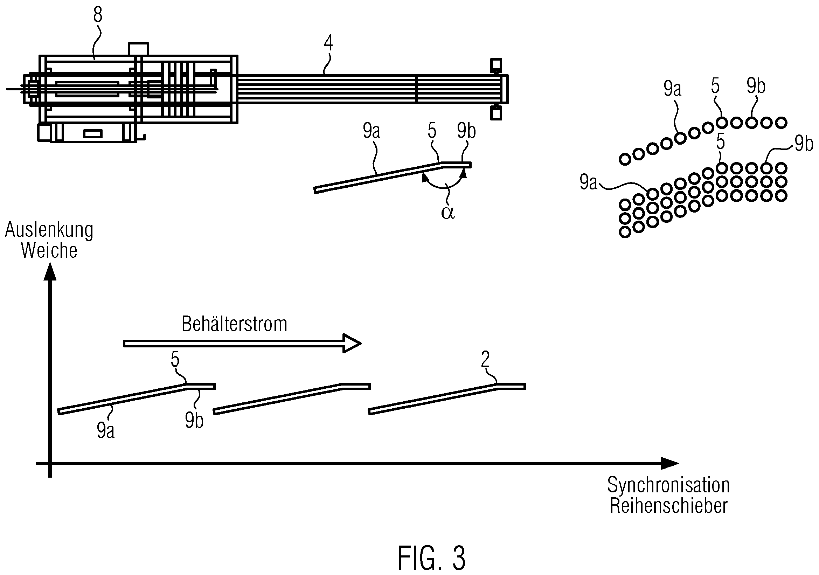

Fig. 3 macht Entsprechendes deutlich. Hinter der Weiche 8 weist der in Fig. 8A und 8B gezeigte Stückgüterstrom dann eine Sägezahnform auf, wie in Figur 3 gezeigt ist. Dabei können die Stückgüter entweder in einer Reihe einlaufen oder in mehreren übereinander angeordneten Reihen, sodass ein sägezahnringförmiger Pulk entsteht. Der sägezahnförmige Abschnitt weist dabei eine Spitze S auf, sowie zwei 9a, 9b unter flachem Winkel α zulaufende Abschnitte. Der Winkel α liegt beispielsweise in einem Bereich von 1,5° bis 10°. Der vorauseilende Abschnitt 9b ist vorzugsweise kleiner als der nacheilende Abschnitt 9a. Wie aus der Fig. 3 hervorgeht, werden durch die Weiche 8 sägezahnförmige Abschnitte erzeugt, die kontinuierlich hintereinander von der Zuführeinrichtung 4 in den Einlaufbereich 11 transportiert werden können.

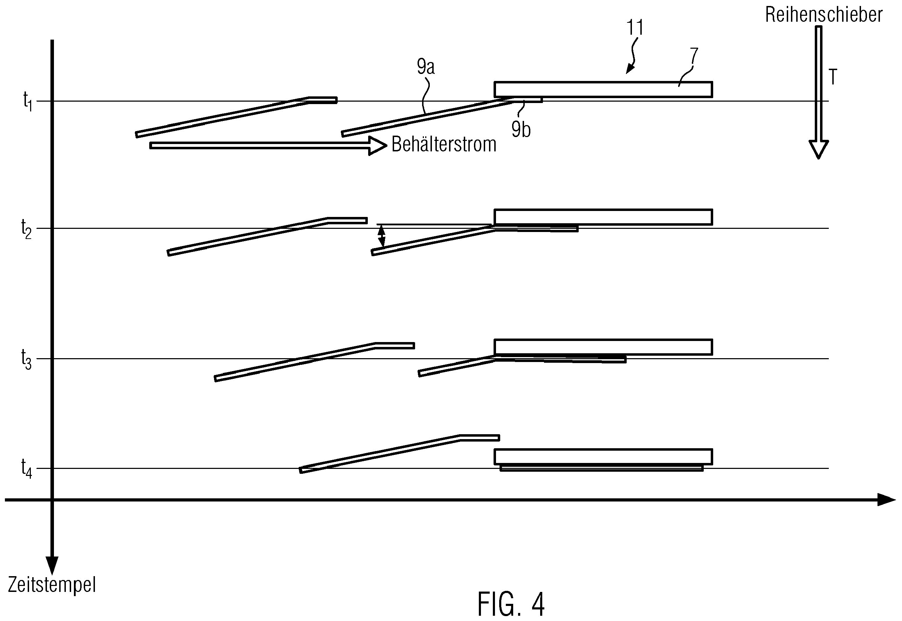

Fig. 4 zeigt ein Weg-Zeit-Diagramm, das die Bewegung der sägezahnförmigen Abschnitte zu verschiedenen Zeitpunkten quer zur Transportrichtung T in den Einlaufbereich 11 zeigt. Zu einem Zeitpunkt t1 wird ein sägezahnförmiger Abschnitt an Stückgütern auf der Zuführeinrichtung 4 in den Einlaufbereich 11 transportiert, und zwar soweit, dass der vorauseilende Abschnitt 9b von dem sich in Transportrichtung T bewegenden Reihenschieber 7 erfasst werden kann. Der Abschnitt 9b erstreckt sich dabei im Wesentlichen parallel zu der Vorderfläche des Reihenschiebers 7. Der Reihenschieber 7 bewegt sich weiter in Transportrichtung T, während gleichzeitig der sägezahnförmige Abschnitt weiter in eine Richtung senkrecht zur Transportrichtung gefördert wird und sich die Stückgüter des nacheilenden Abschnitts 9a der unter einem spitzen Winkel γ zur Vorderfläche des Reihenschiebers verläuft, vor den Reihenschieber 7 bewegen. Dadurch, dass der Abschnitt 9a sich unter einem Winkel zu der Vorderfläche erstreckt, kann der Reihenschieber 7 kontinuierlich weiterbewegt werden, bis sich alle Stückgüter eine Zeile zum Zeitpunkt t4 vor dem Reihenschieber 7 befinden, und nun als Zeile auf die Pufferfläche 3 geschoben werden können. Zu diesem Zeitpunkt bewegt sich bereits der nachfolgende sägezahnförmige Abschnitt in Richtung Einlaufbereich 11, sodass sich der Vorgang wiederholen kann.

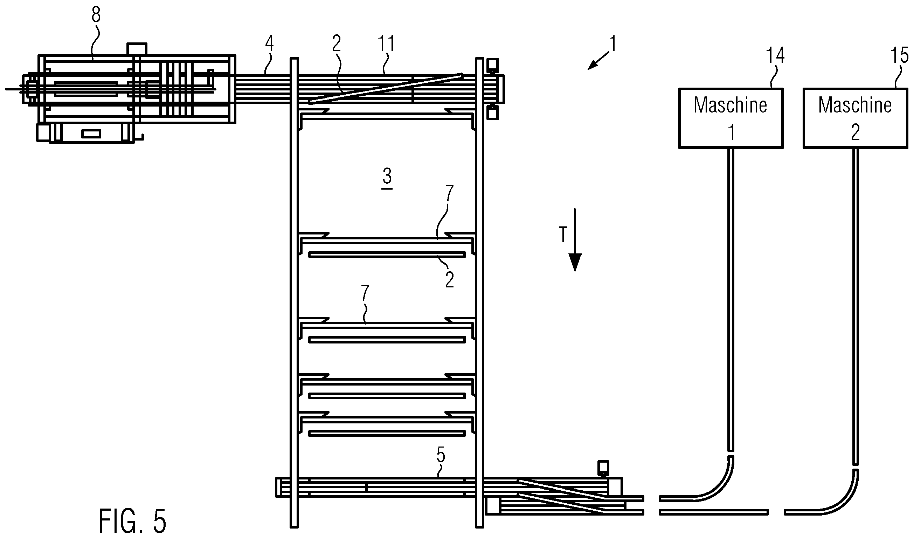

Fig. 5 zeigt die in Fig. 1 dargestellte Puffervorrichtung mit einer Verteilereinrichtung 10.Die Puffervorrichtung weist eine Zuführeinrichtung 4 auf, die die Stückgüter 2 in einem Strang zuleitet und in zwei Strängen ableitet und zu zwei Maschinen 14 und 15 führt. Dazu kann eine entsprechende Verteileinrichtung 10 vorgesehen sein, um die Spur zu trennen. Dazu können beispielsweise auf die Auslaufeinrichtung 5 zwei Zeilen an Stückgütern nebeneinander beispielsweise durch zwei Reihenschieber 7 geschoben werden, die anschließend getrennt werden. In Fig. 5 sind hier zwei Maschinen und zwei Abförderstränge gezeigt, jedoch können auch mehrere Abförderstränge erzeugt werden. Bei den Maschinen 14 und 15 kann es sich um Gebindepackmaschinen, Packmaschinen, etc. handeln. Wenn mehrere Zeilen auf die Auslaufeinrichtung geschoben werden, muss die Abfördereinrichtung gestoppt werden, bis alle Zeilen auf der Abfördereinrichtung platziert sind.

Es ist auch möglich, dass die Abfördereinrichtung 5 aus zwei parallelen Förderbändern gebildet wird, die nebeneinander am auslaufseitigen Ende der Pufferfläche angeordnet sind, sodass die Reihenschieber zunächst eine Zeile auf das letzte Abförderband schieben und eine weitere Zeile auf das der Pufferfläche 3 zugewandte Förderband, sodass die Stückgüter in zwei Strängen abgefördert werden können.

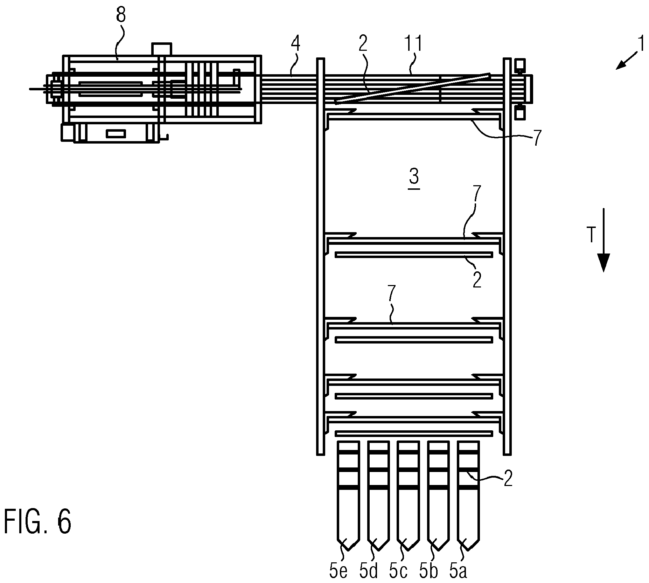

Fig. 6 zeigt eine weitere Ausführungsform der Abfördereinrichtung. Beispielsweise kann hier anstelle des Quertransports am auslaufseitigen Ende der Pufferfläche d. h. anstelle der senkrecht zur Transportrichtung T verlaufenden Abfördereinrichtung ein anschließender Längstransport in Transportrichtung T erfolgen. Dazu kann am Ende der Pufferfläche 3 ein Messerkantenüberschub erfolgen. Unter Messerkantenüberschub versteht man einen Übergang von einem Transportband zum nächsten Transportband mit sehr kleinen Umlenkrädern, damit wird das notwendige Totblech zur Überbrückung des Zwischenraums an der Transportoberfläche minimiert. Dabei können die Stückgüter um 90° gedreht werden, indem sie einmal einlaufseitig quergeschoben werden und am Abtransport diese Querausrichtung nicht mehr ändern.

Außerdem ist es hier auch möglich, anstatt des zuvor gezeigten durchgehenden Reihenschiebers 7 einen Reihenschieber zu verwenden, der mehrere modulare Segmente 7a, b, c, wie in Fig. 7 dargestellt ist, aufweist, die jeweils vorzugsweise ebenfalls unabhängig antreibbar sind und sich unabhängig mit unterschiedlicher Geschwindigkeit in Transportrichtung T bewegen können. Somit kann auch einzeln, oder eine bestimmte Anzahl an Stückgütern aus dem Zeilenverbund ausgeschoben werden. Zudem können Gebinde-Lagen oder Großbehälter für Displayverpackungen vorbereitet werden. Es können die Stückgüter mit Lücken ausgetaktet werden, insbesondere bei Einsatz eines zwischengeschalteten Quertransports. Auch eine Umverpackung von Gebinden oder Paketen ist möglich.

Nachfolgend wird das erfindungsgemäße Verfahren unter Bezugnahme der Fig. 1 bis 5 näher erläutert. Zum Puffern von Stückgütern werden zunächst Stückgüter 2, wie Behälter oder Flaschen oder Gebinde, von einer Zufördereinrichtung 4 antransportiert. Die Stückgüter 2 werden in einer Richtung antransportiert, die sich im Wesentlichen senkrecht zur Richtung T erstreckt. Vor dem Einlaufbereich 11 werden, wie zuvor beschrieben, sägezahnförmige Abschnitte erzeugt, die hintereinander, wie aus Fig. 3 hervorgeht, in Richtung Einlaufbereich 11 der Zufördereinrichtung 4 transportiert werden. Während, wie in Zusammenhang mit Fig. 4 vorher näher erläutert wurde, sich der sägezahnförmige Abschnitt 9b in den Einlaufbereich 11 hineinbewegt wird, nähert sich ein umlaufender Reihenschieber 11 und erfasst diesen Abschnitt 9b, wobei sich die Stückgüter nach und nach vor den sich in Transportrichtung T bewegenden Reihenschieber 7 bewegen, bis zu einem Zeitpunkt t4 alle Stückgüter einer Zeile vor dem Reihenschieber 7 befinden, der dann die Zeile auf die Pufferfläche 3 schieben kann. Wie aus Fig. 4 hervorgeht, können nachfolgende Reihenschieber 7 die sägezahnförmigen Abschnitte zeilenweise auf die Pufferfläche schieben. Die Bewegung des Reihenschiebers 7 ist an die Einlaufgeschwindigkeit der Stückgüter im Einlaufbereich 11 abgestimmt. Die Reihenschieber 7 bewegen, z.B. schieben die Stückgüter über die Pufferfläche 3 oder stützen sie ab, wenn sich die Pufferfläche selbst in Transportrichtung bewegt.

Da die Reihenschieber 7 unabhängig voneinander angetrieben sind, können Freiräume in der Mitte der Pufferfläche 3 einfach überfahren werden. Wenn beispielsweise der Freiraum komplett überbrückt wurde, wird die Bewegung wieder verlangsamt und an die Auslaufsituation angepasst. Das bedeutet, dass unterschiedliche Reihenschieber unterschiedliche Geschwindigkeiten aufweisen können und auch die Geschwindigkeit eines Reihenschiebers 7 während eines Umlaufs auf der Umlaufbahn 12 variiert. Am Ende der Pufferfläche 3, dass der Abfördereinrichtung 5 zugewandt ist, kann dann eine bedarfsorientierte Anzahl von Zeilen aus dem Tisch auf das Abförderband gefahren werden, wobei beispielsweise von zwei aufeinanderfolgenden Reihenschiebern 7, wie aus Fig. 5 hervorgeht, zwei Zeilen auf die Abfördereinrichtung 5 geschoben werden, dann die Spur über eine Verteileinrichtung 10 getrennt wird und die Stückgüter unterschiedlichen Maschinen 14 und 15 zugeführt werden. Somit ist eine einfache Verteilung von einem Stückgüterstrang auf zwei Stückgüterstränge möglich. Bei Ausfall einer Maschine kann dann auch lediglich ein Stückgüterstrang ausgeschoben werden, um nur eine nachfolgende Maschine zu versorgen. Die andere Maschine kann somit stillgelegt werden und die überschüssigen Stückgüter können durch die Puffervorrichtung abgepuffert werden, d.h. zunächst auf der Pufferfläche verweilen. Beim Aufschieben der Zeilen muss darauf geachtet werden, dass die Abfördereinrichtung, d. h. hier das Auslaufband 5, bei Überschieben durch den Reihenschieber kurzzeitig gestoppt wird, oder man fährt ebenfalls in einem Sägezahnmuster aus dem Puffer 3. Um ein Sägezahnmuster am Auslaufband zu erzeugen wird der Reihenschieber 7 mit einem Stückgutstrang langsam über mehrere Auslaufbänder gefahren. Die Auslaufbänder können unterschiedliche Geschwindigkeiten haben und müssen nebeneinander angeordnet sein. Wenn der Reihenscheiber mit dem Stückgutstrang über das erste Auslaufband fährt werden die ersten Behälter vom Auslaufband abgezogen bzw. abgefördert. Dabei bewegt sich der Reihenschieber weiter und schiebt so den immer kleiner werdenden Stückgutstrang über die nebeneinander angeordneten Auslaufbänder. Diese Auslaufbänder fördern so die Behälter in einem Sägezahn Muster ab, welches dem Muster gleicht mit dem die Behälter von den Reihenschiebern aufgenommen wurden. Diese Variante ist zeichnerisch nicht dargestellt.

Die erfindungsgemäße Vorrichtung ermöglicht auch, dass ein Stückgüterstrang für eine Serviceausleitung ausgefahren werden kann.

Grundsätzlich ist es auch möglich, dass durch einen in Transportrichtung T nachgeordneten Transporteur eine 90°-Drehung der Stückgüter erfolgt. Bei einer Ausführung des Reihenschiebers mit Reihenschiebermodulen 7a, b, c, wie in Fig. 7 gezeigt ist, kann die Stückgutzeile wiederum gesplittet werden.

Die erfindungsgemäße Puffervorrichtung erlaubt, auf verschiedenste Anforderungen in einer Linie individuell zu reagieren. Darüber hinaus ergibt sich der Vorteil einer geringen Stellfläche und einfacher Bewegungsabläufe.

Die folgenden Ausführungsbeispiele sind zudem umfasst:
1. Puffervorrichtung (1) für Stückgüter (2), insbesondere Behälter, Flaschen oder Gebinde, mit
   einer Pufferfläche (3),
   einer Zufördereinrichtung (4), zum Zufördern von Stückgüter zu der Pufferfläche (3),
   einer Abfördereinrichtung (5), zum Abfördern von Stückgütern von der Pufferfläche (3),
   wobei mehrere umlaufende, unabhängig voneinander antreibbare Reihenschieber (7), die die Stückgüter (2) in Transportrichtung (T) durch die Pufferfläche (3) transportieren können.
2. Puffervorrichtung nach Ausführungsbeispiel 1, wobei die Reihenschieber (7) von mehreren unabhängigen Antrieben (13) bewegt werden, insbesondere über Längsstatorantriebe, kuppelbare Transportketten, oder Einzelantriebe die in Zahnstangen eingreifen.
3. Puffervorrichtung nach Ausführungsbeispiel 1 oder 2, wobei in Transportrichtung (T) von dem der Zufördereinrichtung (4) zugewandten Ende der Pufferfläche (3) zu einem der Abfördereinrichtung (6) zugewandten Ende der Pufferfläche (3) mehrere Reihenschieber (7) hintereinander die Stückgüter schieben können, wobei insbesondere mehr als 10, insbesondere mehr als 15 umlaufende Reihenschieber vorgesehen sind.
4. Puffervorrichtung nach mindestens einem der Ausführungsbeispiele 1 bis 3, wobei die Umlaufbahn der Reihenschieber oberhalb der Pufferfläche (3) angeordnet ist.
5. Puffervorrichtung nach mindestens einem der Ausführungsbeispiele 1 bis 4, wobei ein Reihenschieber (7) eine Breite (b) aufweist, die im Wesentlichen der Breite der Pufferfläche (3) entspricht und die Reihenschieber (7) vorzugsweise beidseitig geführt werden.
6. Puffervorrichtung nach mindestens einem der Ausführungsbeispiele 1 bis 5, wobei der Reihenschieber (7) mehrere in einer Richtung quer zur Transportrichtung (T) angeordnete Schiebermodule(7a,7b,7c) umfasst, die insbesondere unabhängig voneinander antreibbar sind.
7. Puffervorrichtung nach mindestens einem der Ausführungsbeispiele 1 bis 6, wobei die Puffervorrichtung (1) vor dem Einlaufbereich der Zufördereinrichtung (4) auf die Pufferfläche (3) eine Ablenkeinrichtung, insbesondere eine Weiche (8) umfasst, die den von der Zufördereinrichtung (4) zugeführten Stückgüterstrang (4) derart ablenkt, dass eine bestimmte Anzahl aufeinanderfolgender Stückgüter in eine Sägezahnform gebracht werden kann.
8. Puffervorrichtung (1) nach mindestens einem der Ausführungsbeispiele 1 bis 7, wobei die Abfördereinrichtung (5) mindestens zwei Abförderbänder umfasst (5a,5b) und mindestens eine Zeile an Stückgüter von der Pufferfläche (3) auf ein erstes Abförderband (5a) geschoben werden kann und bei mehreren nebeneinanderliegenden Zeilen der Artikelstrom über eine Verteileinrichtung (10) auf die mindestens zwei Abförderbänder (5a, b) in zwei Stränge aufgeteilt werden kann, oder
   die Abfördereinrichtung (5) zwei nebeneinanderliegende Abförderbänder umfasst (5a,5b) und die Zeile an Stückgütern auf das eine oder andere Abförderband (5a, 5b) von dem Reihenschieber oder einem Reihenschiebermodul geschoben werden kann oder
   die Stückgüter nach der Pufferfläche (3) von einen oder mehreren Abförderbändern weiter in Transportrichtung (T) gefördert werden, und dabei insbesondere um 90° gedreht werden.
9. Verfahren zum Puffern von Stückgütern (2), insbesondere Behälter, Flaschen oder Gebinde, insbesondere mit einer Puffervorrichtung (1) nach mindestens einem der Ausführungsbeispiele 1 bis 8, wobei
   die Stückgüter (2) über eine Zufördereinrichtung (4) zu einer Pufferfläche (3) gefördert werden,
   von unabhängig voneinander angetriebenen, umlaufenden Reihenschiebern (7) in Transportrichtung (T) durch die Pufferfläche (3) zu einer Abfördereinrichtung (5) transportiert werden und
   von der Abfördereinrichtung (5) abtransportiert werden.
10. Verfahren nach Ausführungsbeispiel 9, wobei eine bestimmte Anzahl an Stückgütern über die Reihenschieber zeilenweise auf die Pufferfläche (3) geschoben werden.
11. Verfahren nach Ausführungsbeispiel 9 oder 10, wobei die Reihenschieber (7) zumindest zeitweise mit unterschiedlicher Geschwindigkeit angetrieben werden, wobei vorzugsweise die Geschwindigkeit eines Reihenschiebers bei Umlauf um seine Umlaufbahn variiert.
12. Verfahren nach mindestens einem der Ausführungsbeispiele 9 -11, wobei vor dem Einlauf auf die Pufferfläche (3) eine bestimmte Anzahl an Stückgütern in eine Sägezahnform gebracht werden,
   wobei die Sägezahnform eine Spitze (S) und zwei unter flachem Winkel (α) zulaufende Abschnitte (9a, b) aufweist,
   wobei beim Einlaufen der Stückgüter in einen Einlaufbereich (11) der Zuführeinrichtung (4), die an die Pufferfläche (3) angrenzt, ein Reihenschieber (7) sich in Transportrichtung (T) bewegt und zunächst an den vorauseilenden Abschnitt (9b) der sägezahnförmigen Stückgüter, der sich im Wesentlichen parallel zur Vorderfläche des Reihenschiebers (7) erstreckt, angreift und in Transportrichtung (T) schiebt und sich weiter in Transportrichtung bewegt, während sich die Stückgüter des nacheilenden Abschnitts (9a), der sich unter einem spitzen Winkel zur Vorderfläche des Reihenschiebers (7) erstreckt, nach und nach vor den Reihenschieber (7) bewegen, bis die Artikel vor dem Reihenschieber (7) liegen und auf die Puffferfläche geschoben werden.
13. Verfahren nach mindestens einem der Ausführungsbeispiele 9 bis 12, wobei die Reihenschieber (7) auf einer Umlaufbahn oberhalb der Pufferfläche (3) umlaufen und vorzugsweise beidseitig geführt werden.
14. Verfahren nach mindestens einem der Ausführungsbeispiele 9 bis 13, wobei die Stückgüter der Pufferfläche in einem Strang zugeleitet werden und eine Verteilereinrichtung (10) die Stückgüter (2) in zwei oder mehr Stränge zum Abfördern zu zwei oder mehr nachfolgenden Maschinen (14,15) teilt.
15. Verfahren nach mindestens einem der Ausführungsbeispiele 1-14, wobei in Transportrichtung mehrere, vorzugsweise zwei parallel angeordnete Zeilen von mehreren Reihenschiebern, vorzugsweise zwei, auf die Abfördereinrichtung geschoben werden und anschließend über eine Verteilereinrichtung in mehrere, vorzugsweise zwei Stückgüterstränge geteilt werden oder
   nur eine Zeile von einem Reihenschieber auf die Abfördereinrichtung (5) geschoben wird und ein Stückgüterstrang abgeleitet wird.

## Patentansprüche

1. Puffervorrichtung (1) für Stückgüter (2), beispielsweise Behälter, Flaschen oder Gebinde, mit
einer Pufferfläche (3),
einer Zufördereinrichtung (4) zum Zufördern von Stückgüter zu der Pufferfläche (3),
einer Abfördereinrichtung (5) zum Abfördern von Stückgütern von der Pufferfläche (3), wobei sich die Zufördereinrichtung (4) bis in einen Einlaufbereich (11) erstreckt, der an das hintere Ende der Pufferfläche (3) angrenzt und wobei am gegenüberliegenden Ende der Pufferfläche (3) die Abfördereinrichtung (5) angeordnet ist,
**gekennzeichnet durch**
mehrere umlaufende, unabhängig voneinander antreibbare Reihenschieber (7), die die Stückgüter (2) in Transportrichtung (T) durch die Pufferfläche (3) transportieren können, wobei die Umlaufbahn der Reihenschieber oberhalb der Pufferfläche (3) angeordnet ist und wobei sich sowohl die Zufördereinrichtung (4) als auch die Abfördereinrichtung (5) in einer Richtung senkrecht zur Transportrichtung (T) erstrecken, in der die Stückgüter durch die Pufferfläche (3) bewegt werden.

2. Die Puffervorrichtung nach Anspruch 1, wobei die Zufördereinrichtung (4) ausgebildet ist, die Stückgüter (2) in einem Stückgüterstrang anzutransportieren, wobei beispielsweise der Stückgüterstrang einreihig ausgebildet ist oder wobei beispielsweise mehrere Stückgüter nebeneinander in einem Strang transportierbar sind, wobei eine bestimmte Anzahl von Stückgütern (2) im Einlaufbereich (11) von einem Reihenschieber (7) erfassbar und als Zeile auf die Pufferfläche (3) schiebbar ist.

3. Die Puffervorrichtung nach Anspruch 1 oder 2, wobei die Reihenschieber (7) eine Breite (b) aufweisen, die im Wesentlichen der Breite der Pufferfläche (3) entspricht, oder aber nur geringfügig, 1 % bis 5 % kleiner ist.

4. Die Puffervorrichtung nach einem der Ansprüche 1 bis 3, wobei die Reihenschieber (7) beidseitig oberhalb der Pufferfläche (3) geführt werden.

5. Die Puffervorrichtung nach einem der Ansprüche 1 bis 4, wobei die Reihenschieber (7) frei beweglich an einer umlaufenden Führung der Umlaufbahn (12) angeordnet sind.

6. Die Puffervorrichtung nach einem der Ansprüche 1 bis 5, wobei die die Reihenschieber (7) von mehreren unabhängigen Antrieben (13) bewegt werden, beispielsweise über Längsstatorantriebe, kuppelbare Transportketten, oder Einzelantriebe die in Zahnstangen eingreifen.

7. Die Puffervorrichtung nach einem der Ansprüche 1 bis 6, wobei der Reihenschieber (7) mehrere in einer Richtung quer zur Transportrichtung (T) angeordnete Schiebermodule (7a,7b,7c) umfasst, die beispielsweise unabhängig voneinander antreibbar sind.

8. Die Puffervorrichtung nach einem der Ansprüche 1 bis 7, wobei die Pufferfläche (3) selbst als Förderband, das sich in Transportrichtung (T) bewegt und umlaufend angetrieben wird, ausgebildet ist.

9. Die Puffervorrichtung nach einem der Ansprüche 1 bis 8, wobei die Puffervorrichtung (1) vor dem Einlaufbereich der Zufördereinrichtung (4) auf die Pufferfläche (3) eine Ablenkeinrichtung, beispielsweise eine Weiche (8) umfasst, die den von der Zufördereinrichtung (4) zugeführten Stückgüterstrang (4) derart ablenkt, dass eine bestimmte Anzahl aufeinanderfolgender Stückgüter in eine Sägezahnform gebracht werden kann.

10. Die Puffervorrichtung nach einem der Ansprüche 1 bis 9, wobei die Abfördereinrichtung (5) mindestens zwei Abförderbänder umfasst (5a,5b) und mindestens eine Zeile an Stückgüter von der Pufferfläche (3) auf ein erstes Abförderband (5a) geschoben werden kann und bei mehreren nebeneinanderliegenden Zeilen der Artikelstrom über eine Verteileinrichtung (10) auf die mindestens zwei Abförderbänder (5a, b) in zwei Stränge aufgeteilt werden kann, oder
wobei die Abfördereinrichtung (5) zwei nebeneinanderliegende Abförderbänder umfasst (5a,5b) und die Zeile an Stückgütern auf das eine oder andere Abförderband (5a, 5b) von dem Reihenschieber oder einem Reihenschiebermodul geschoben werden kann oder
wobei die Stückgüter nach der Pufferfläche (3) von einen oder mehreren Abförderbändern weiter in Transportrichtung (T) gefördert werden, und dabei beispielsweise um 90° gedreht werden.

11. Verfahren zum Puffern von Stückgütern (2), beispielsweise Behälter, Flaschen oder Gebinde, beispielsweise mit einer Puffervorrichtung (1) nach einem der Ansprüche 1 bis 10, wobei
die Stückgüter (2) über eine Zufördereinrichtung (4) zu einer Pufferfläche (3) gefördert werden, von unabhängig voneinander angetriebenen, umlaufenden Reihenschiebern (7) in Transportrichtung (T) durch die Pufferfläche (3) zu einer Abfördereinrichtung (5) transportiert werden und
von der Abfördereinrichtung (5) abtransportiert werden.

12. Das Verfahren nach Anspruch 11, wobei eine bestimmte Anzahl an Stückgütern über die Reihenschieber zeilenweise auf die Pufferfläche (3) geschoben werden, wobei beispielsweise die Reihenschieber (7) zumindest zeitweise mit unterschiedlicher Geschwindigkeit angetrieben werden, wobei beispielsweise die Geschwindigkeit eines Reihenschiebers bei Umlauf um seine Umlaufbahn variiert.

13. Das Verfahren nach Anspruch 11 oder 12, wobei vor dem Einlauf auf die Pufferfläche (3) eine bestimmte Anzahl an Stückgütern in eine Sägezahnform gebracht werden,
wobei die Sägezahnform eine Spitze (S) und zwei unter flachem Winkel (α) zulaufende Abschnitte (9a, b) aufweist,
wobei beim Einlaufen der Stückgüter in einen Einlaufbereich (11) der Zuführeinrichtung (4), die an die Pufferfläche (3) angrenzt, ein Reihenschieber (7) sich in Transportrichtung (T) bewegt und zunächst an den vorauseilenden Abschnitt (9b) der sägezahnförmigen Stückgüter, der sich im Wesentlichen parallel zur Vorderfläche des Reihenschiebers (7) erstreckt, angreift und in Transportrichtung (T) schiebt und sich weiter in Transportrichtung bewegt, während sich die Stückgüter des nacheilenden Abschnitts (9a), der sich unter einem spitzen Winkel zur Vorderfläche des Reihenschiebers (7) erstreckt, nach und nach vor den Reihenschieber (7) bewegen, bis die Artikel vor dem Reihenschieber (7) liegen und auf die Puffferfläche geschoben werden.

14. Das Verfahren nach einem der Ansprüche 11 bis 13, wobei die Stückgüter der Pufferfläche in einem Strang zugeleitet werden und eine Verteilereinrichtung (10) die Stückgüter (2) in zwei oder mehr Stränge zum Abfördem zu zwei oder mehr nachfolgenden Maschinen (14,15) teilt.

15. Verfahren nach einem der Ansprüche 11 bis 14, wobei in der Transportrichtung (T) mehrere, beispielsweise zwei parallel angeordnete Zeilen von mehreren Reihenschiebern, beispielsweise zwei, auf die Abfördereinrichtung geschoben werden und anschließend über eine Verteilereinrichtung in mehrere, beispielsweise zwei Stückgüterstränge geteilt werden oder nur eine Zeile von einem Reihenschieber auf die Abfördereinrichtung (5) geschoben wird und ein Stückgüterstrang abgeleitet wird.
